# EUROPEAN PATENT APPLICATION

(11) **EP 2 618 414 A1**
(43) Date of publication of application: **24.07.2013**
(21) Application number: 11825013.3
(22) Date of filing: 05.09.2011
(51) Int. Cl.: H01M 8/02, H01M 4/88, H01M 8/10

(54) **MEMBRANE ELECTRODE ASSEMBLY, METHOD FOR PRODUCING MEMBRANE ELECTRODE ASSEMBLY, AND FUEL BATTERY**

(30) Priority: 13.09.2010 JP 2010204597
(71) Applicant: Toppan Printing Co., Ltd., Tokyo 110-0016 (JP)
(72) Inventor: UEHARA Naoko, Tokyo 110-0016 (JP); HABA Yasuhiro, Tokyo 110-0016 (JP)
(74) Representative: TBK
(86) International application number: PCT/JP2011/070133
(87) International publication number: WO 2012/036007

(57) **Abstract**

<Problem>

It is an object of the invention to provide an MEA in which a high level of interfacial adhesions are achieved between its PEM and catalyst layer so that the catalyst layer does not easily peel from the PEM and to provide a manufacturing method of the MEA and a fuel cell employing the MEA and having an excellent battery performance.

<Solution>

In the manufacturing method of the MEA 4, since an adhesion layer and a catalyst layer are formed respectively by coating an ink which contains a solvent directly on their adjacent layer, polymer electrolytes in the adjacent layer present near the interface adhere while slightly dissolving. As a result, interfacial adhesions of the PEM 1 or the catalyst layer 3 can be enhanced more than in the case of a manufacturing method in which the adhesion layer and the catalyst layer which are respectively formed on temporary substrates are transferred onto the PEM by thermal compression. In addition, the MEA 4 has a high level of interfacial adhesions between the PEM 1 and the catalyst layer 3 so that the catalyst layer 3 does not easily peel from the PEM 1. Furthermore, the fuel cell employing the MEA 4 has an excellent battery performance because the catalyst layer 3 is hardly stripped off the PEM 1.

## Description

### TECHNICAL FIELD

The present invention relates to a membrane electrode assembly (MEA), a manufacturing method thereof and a fuel cell having the MEA.

### BACKGROUND ART

In order to improve battery performance of a fuel cell, it is essential for an MEA used in the fuel cell to have a high level of interfacial adhesiveness between a polymer electrolyte membrane (PEM) and a catalyst layer. If the interfacial adhesion between the PEM and the catalyst layer is poor, the PEM may be stripped off the catalyst layer resulting in degradation of battery performance. In particular, in the case where a hydrocarbon PEM is used, there is a high risk of degradation in battery performance since the interfacial adhesion between the PEM and the catalyst layer is liable to be poor.

It has been known that the adhesion can be improved by a method of arranging an adhesion layer which contains a proton conductive polymer electrolyte between the PEM and the catalyst layer. For examples of such a method, Patent documents 1 and 2 teach a manufacturing method of an MEA in which an adhesion layer having proton conductivity is formed either on the PEM or on the catalyst layer followed by combining them together by thermal compression.

### CITATION LIST

### PATENT DOCUMENTS

<Patent document 1>: JP-B-3608565.
<Patent document 2>: JP-A-2009-231123.

### SUMMARY OF THE INVENTION

### TECHNICAL PROBLEM

However, in the manufacturing method of adhering the adhesion layer and the catalyst layer by thermal compression, insufficient interfacial adhesions between the PEM and the catalyst layer may cause their separation during operation of the fuel cell for power generation.
It is an object of the present invention to provide an MEA (or its manufacturing method) which has a high level of interfacial adhesions between the PEM and the catalyst layer and in which the catalyst layer does not easily peel from the PEM.

### SOLUTION TO THE PROBLEM

For the purpose of solving the above problem, one aspect of the present invention is a manufacturing method of an MEA, the MEA having a PEM, a catalyst layer and an adhesion layer, the catalyst layer being arranged on both surfaces of the PEM respectively, the adhesion layer being arranged between the PEM and the catalyst layer and combining the PEM and the catalyst layer together, and the method including forming the adhesion layer and the catalyst layer on the PEM by a coating method.

In addition, it is preferable that the above manufacturing method of an MEA preferably has a fixing process in which the PEM is fixed, a heating process in which the PEM fixed in the fixing process is heated, a first forming process in which the adhesion layer is formed by coating an adhesion layer ink containing a polymer electrolyte and a solvent on the PEM after the heating process and subsequently drying the adhesion layer ink, and a second forming process in which the catalyst layer is formed by coating a catalyst layer ink containing a catalyst and a solvent on the adhesion layer and subsequently drying the catalyst layer ink.

In addition, it is preferable that the PEM is heated at a temperature in the range of 60-200 °C in the heating process.
In addition, another aspect of the present invention is an MEA obtained by the above manufacturing method of an MEA.
In addition, still another aspect of the present invention is a fuel cell including the above MEA.

### ADVANTAGEOUS EFFECT OF THE INVENTION

In the manufacturing method of an MEA of the present invention, since each of the adhesion layer and the catalyst layer is formed by coating an ink which contains a solvent directly on its adjacent layer, polymer electrolytes in the adjacent layer present near the interface adhere while slightly dissolving. As a result, interfacial adhesions between the PEM and the catalyst layer can be enhanced more than in the case of a manufacturing method in which the adhesion layer and the catalyst layer are respectively formed by thermal compression. In addition, the manufacturing method of the present invention makes it possible to reduce a process in manufacturing because it does not require a thermal compression process.

In addition, since the manufacturing method of an MEA of the present invention includes a process of fixing and heating the PEM, it is possible to vaporize a solvent in an adhesion layer ink or a catalyst layer ink and immediately remove them even if they are coated directly on the PEM or the adhesion layer. Thus, it is possible to inhibit a deformation of the PEM by the solvent.
In addition, the MEA of the present invention has a high level of interfacial adhesions between the PEM and the catalyst layer so that the catalyst layer does not easily peel from the PEM. Furthermore, the fuel cell which uses the MEA of the present invention has an excellent battery performance because the interfacial adhesions between the PEM and the catalyst layer are so high that the catalyst layer is hardly stripped off the PEM.

### BRIEF DESCRIPTION OF THE DRAWINGS

FIG. 1 is a cross sectional schematic diagram of an MEA of an embodiment of the present invention.
FIG. 2 is another cross sectional schematic diagram of an MEA of an embodiment of the present invention.
FIG. 3 is an explanatory diagram for a manufacturing method of an MEA of an embodiment of the present invention.

### DESCRIPTION OF THE EMBODIMENT

An embodiment of the present invention is described below.

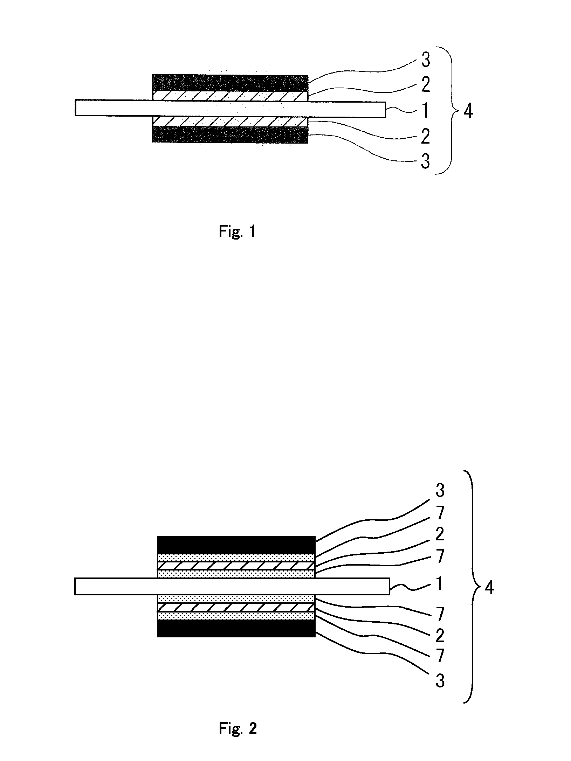

FIG. 1 is a cross sectional schematic diagram of an MEA 4 in this embodiment.
The MEA 4 illustrated in FIG. 1 has an adhesion layer 2 which is laminated on both surfaces of a PEM 1 respectively, and a catalyst layer 3 which is laminated on an opposite surface of the adhesion layer from the side of the PEM 1.

The adhesion layer 2 is formed by coating an adhesion layer ink described later onto the PEM 1 followed by drying and contains a proton conductive polymer electrolyte. Thickness of the adhesion layer 2 needs to be sufficient for maintaining the adhesion between the PEM1 and the catalyst layer 3, and is preferably in the range of 0.1 µm to 3 µm. If the thickness is lower than 0.1 µm, it may be impossible to sufficiently maintain the adhesion. On the other hand, if the thickness is higher than 3 µm, battery performance of a fuel cell employing the MEA 4 may be degraded because of an increase of resistance in the adhesion layer 2.

The catalyst layer 3 contains a catalyst and a polymer electrolyte. The catalyst layer 3 is formed by a catalyst layer ink described later onto the adhesion layer 2 followed by drying.
Any proton conductive polymer electrolyte may be used as the polymer electrolyte contained in the PEM 1, the adhesion layer 2 and the catalyst layer 3. For example, a fluoropolymer electrolyte and a hydrocarbon polymer electrolyte etc. can be used. In addition, the same type of polymer electrolyte may be used in the PEM 1, the adhesion layer 2 and the catalyst layer 3, while different types of polymer electrolytes can also be used in the PEM 1, the adhesion layer 2 and the catalyst layer 3, respectively.

It is possible to use, for example, Nafion® (made by Du Pont), Flemion® (made by Asahi Glass Co., Ltd.), Aciplex® (made by Asahi Kasei Cooperation), and Gore Select® (made by W. L. Gore & Associates, Inc.) as the fluoropolymer electrolyte.
It is possible to use, for example, electrolytes of sulfonated polyether ketone, sulfonated polyether sulfone, sulfonated polyether ether sulfone, sulfonated polysulfide, and sulfonated polyphenylene etc. as the hydrocarbon polymer electrolyte.

It is possible to use a membrane containing one of the polymer electrolyte described above as the PEM 1. In addition, it is preferable that the polymer electrolyte contained in the adhesion layer 2 is highly adhesive to the polymer electrolytes contained in the PEM 1 and the catalyst layer 3. For example, a polymer electrolyte with a softening temperature lower than those of the polymer electrolytes contained in the PEM 1 and the catalyst layer 3 can be used. Specifically, a polymer electrolyte with a softening temperature lower than those of the polymer electrolytes contained in the PEM 1 and the catalyst layer 3 by 0-200 °C is used. Then, the polymer electrolyte contained in the adhesion layer 2 softens by heat more easily than the polymer electrolytes contained in the PEM 1 and the catalyst layer 3 so that it becomes possible to make the interfacial adhesions without heating to an extremely high temperature even when the PEM 1 has a rather high softening temperature. It is possible to find softening temperatures of the polymer electrolytes as a tan δ peak temperature obtained from a dynamic viscoelasticity measurement under a condition of temperature increase by approximately 4 °C/minute.

The adhesion layer ink contains the polymer electrolyte and a solvent. In addition, the catalyst layer ink contains the catalyst and a solvent.
There is no particular limitation to the solvent contained in the adhesion layer ink and the solvent contained in the catalyst layer ink as long as the polymer electrolyte is dispersed in the solvent. It is preferable if the solvent easily evaporates by heat and can be removed from the ink. For example, a solvent with a boiling point of 150 °C or lower is preferable. Incidentally, the solvent may also be evaporated by heat under a reduced pressure or a flowing air condition. Alternatively, the solvent may be evaporated by pressure reduction or an air current without heating the ink. Specifically, a single solvent selected from water, alcohols such as methanol, ethanol, 1-propanol, 2-propanol, 1-butanol, 2-butanol, isobutyl alcohol, tert-butyl alcohol and pentanol etc., ketones such as acetone, methyl ethyl ketone, pentanone, methyl isobutyl ketone, heptanone, cyclohexanone, methyl cyclohexanone, acetonyl acetone and diisobutyl ketone etc., ethers such as tetrahydrofuran, dioxane, diethylene glycol dimethyl ether, anisole, methoxytoluene and dibutyl ether etc., and other solvents such as dimethylformamide, dimethylacetamide, N-methylpyrrolidone, ethylene glycol, diethylene glycol, diacetone alcohol and 1-methoxy-2-propanol etc. or a mixture of any two or more of these can be used as the solvent.

It is possible, for example, to use a catalyst material which is supported by (or loaded on) conductive particles such as carbon particles etc. as the catalyst. Examples of the catalyst material are platinum, platinoid and other metals such as palladium, ruthenium, iridium, rhodium, osmium, iron, lead, copper, chromium, cobalt, nickel, manganese, vanadium, molybdenum, gallium and aluminum etc., alloys of these, oxides of these, and multiple oxides of these etc. Since there is no particular limitation to a type of the carbon particles as long as the particles are conductive and unreactive to the catalyst, carbon black, graphite, black lead, active carbon, carbon fiber, carbon nanotube and fullerene can be used as the carbon particles.

It becomes difficult to form an electron conducting path when the carbon particles have an excessively small particle diameter. On the other hand, an excessively large particle diameter may cause poor gas diffusion in the catalyst layer and a decrease in catalyst use efficiency. Thus, it is preferable that the carbon particles have a particle diameter in the range of about 10 nm to 1000 nm, and is more preferable if in the range of about 10 nm to 100 nm. Although any solvent which makes it possible to dissolve or disperse the polymer electrolyte and the catalyst can be used as the solvent of the catalyst layer ink, it is preferable that the solvent of the catalyst layer ink is easily removed by vaporizing with heat, similar to the case of the solvent contained in the adhesion layer ink. For example, a solvent having a boiling point of 150 °C or lower is preferable.

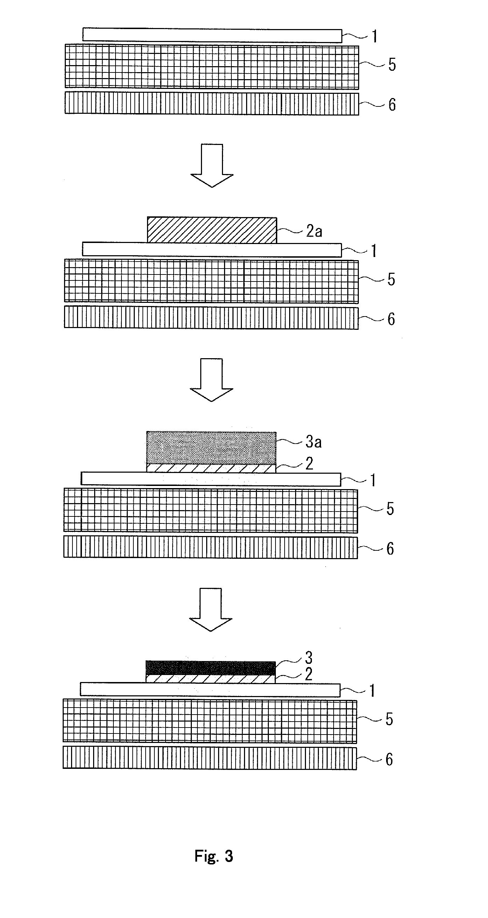

Fig. 3 is an explanatory diagram of a manufacturing method of an MEA of the embodiment.
It is a feature of the manufacturing method of an MEA of the embodiment that while the PEM 1 is fixed and heated, the adhesion layer ink and the catalyst layer ink are sequentially coated thereon and dried so that the adhesion layer 2 and the catalyst layer 3 are directly formed on the PEM 1.

Firstly, the PEM 1 is fixed on a fixing means 5. It is preferable that the fixing means 5 can prevent the PEM 1 moving and changing shape while the adhesion layer ink and the catalyst layer ink are coated on the PEM 1. Specifically, a means by which entire the PEM 1 is fixed is preferable because in the case where only a part such as an edge etc. of the PEM 1 is fixed, another part may be moved or deformed while the inks are coated. For example, a porous plate accompanying a suction mechanism, a paste-on plate, and a plate which fixes using static electricity etc. are available as the fixing means 5 to fix the PEM 1. In the case where the porous plate is used, it is possible to fix the PEM 1 by suctioning the opposite surface of the porous plate from the surface on which the PEM 1 is arranged.

Subsequently, the PEM 1 fixed by the fixing means 5 is heated by a heating means 6. There is no particular limitation to the heating means 6 as long as it can heat up the fixed PEM 1. For example, heating equipment such as oven and heater etc. and a machine which controls temperature around the PEM 1 by infrared ray or warm air etc. which are placed close to the fixing means 5 are available as the heating means 6. In addition, heat may also be conducted to the PEM 1 via the fixing means 5. It is preferable that the heating is performed at a temperature close to a boiling point of the solvent and below a glass-transition temperature of the PEM 1. Specifically, a temperature in the range of 60 °C to 200 °C is preferable when the PEM 1 described above is employed.

Next, the adhesion layer 2 is formed by drying the adhesion layer ink after coating the adhesion layer ink on the PEM 1 fixed by the fixing means 5 and heated by the heating means 6. It is possible to form the adhesion layer 2 by heating a coated layer 2a of the adhesion layer ink to vaporize its solvent.

Next, the catalyst layer 3 is formed by drying the catalyst layer ink after coating the catalyst layer ink on the adhesion layer 2. It is possible to form the catalyst layer 3 by heating a coated layer 3a of the catalyst layer ink to vaporize its solvent. At this moment, for the purpose of preventing the PEM 1 from deforming and wrinkling, the PEM 1 and the adhesion layer 2 may also be heated by the heating means 6 before they are fixed by the fixing means 5 to coat the catalyst layer ink on the adhesion layer 2.

The MEA 4 can be fabricated by further forming another adhesion layer 2 and another catalyst layer 3 on the other surface of the PEM 1 in a similar manner.

There is no particular limitation to a coating method of the adhesion layer ink and the catalyst layer ink as long as it is possible to coat these inks in a predetermined shape. For example, a die coating method, screen printing method and spraying method etc. can be used.

Fig. 2 shows an exemplary cross-sectional view of another MEA 4 of the embodiment.
The adhesion layer ink or the catalyst layer ink is directly coated on its adjacent layer to form the adhesion layer 2 or the catalyst layer 3. Then, a tiny amount of the polymer electrolyte present along the interface dissolves so that a mixed layer 7, in which polymer electrolytes of the PEM 1 and the adhesion layer 2 (or the polymer electrolytes of the adhesion layer 2 and the catalyst layer 3) blend together, are formed between the PEM 1 and the adhesion layer 2 (or between the adhesion layer 2 and the catalyst layer 3). It is possible to control formation of the mixed layer 7 by selecting conditions such as a softening temperature of the polymer electrolyte contained in the adhesion layer ink or the catalyst layer ink, a type of the solvent contained in the adhesion layer ink or the catalyst layer ink, a temperature for heating the PEM 1, and a drying condition for the adhesion layer ink or the catalyst layer ink after being coated etc.
Depending on a combination of the polymer electrolytes contained in the PEM 1, the adhesion layer 2 and the catalyst layer 3, respectively, the mixed layer 7 between the PEM 1 and the adhesion layer 2 may have a composition different from that of the mixed layer 7 between the adhesion layer 2 and the catalyst layer 3.

According to the manufacturing method of an MEA 4 of this embodiment, the adhesion layer ink or the catalyst layer ink which contains a solvent contacts its adjacent layer so that the polymer electrolyte present in the adjacent layer near the interface slightly dissolves and sticks to the adhesion layer or the catalyst layer. As a result, an interfacial adhesion between the PEM 1 and the adhesion layer 2 or between the adhesion layer 2 and the catalyst layer 3 is improved. In addition, the method includes fewer process steps than a method in which the adhesion layer and the catalyst layer are respectively formed on a temporary substrate and sequentially jointed to the PEM by thermal compression because of the absence of the thermal compression process.

In addition, while the PEM may deform and wrinkle when the solvent contacts because the PEM is liable to easily swell with the solvent contained in the adhesion layer ink or the catalyst layer ink, it is possible in the method of this embodiment to prevent the PEM 1 from deforming and wrinkling since the solvent is preliminarily vaporized and removed by the heating means 6. In addition, the catalyst layer 3 does not easily peel from the PEM 1 in the MEA 4 of this embodiment because of a high level of interfacial adhesions between the PEM 1 and the catalyst layer 3. A fuel cell employing the MEA 4 of this embodiment has an excellent battery performance for the catalyst layer 3 is hardly stripped off the PEM 1 because a high level of interfacial adhesions are achieved between the PEM 1 and the catalyst layer 3.

### EXAMPLES

### <Preparation of adhesion layer ink>

20 % by weight of a polymer electrolyte solution (Nafion®, made by Du Pont) was diluted with ethanol and stirred to prepare the adhesion layer ink.

### <Preparation of catalyst layer ink>

A platinum loaded carbon catalyst (trade name: TEC10E50E, made by Tanaka Kikinzoku Kogyo K.K.) and 20 % by weight of a polymer electrolyte solution (Nafion®, made by Du Pont) were mixed together with a solvent mixture of water and ethanol, and received a dispersion treatment by a planetary ball mill to prepare the catalyst layer ink.

### <Example 1>

A PEM employing sulfonated polyether ketone as the polymer electrolyte was used. The PEM was placed on a porous plate accompanying a suction mechanism and was fixed in position by suction. A heater was arranged on the other side of the porous plate and was operated so that the temperature of the PEM became 80 °C. The adhesion layer ink was coated on the PEM by a screen printing method and the solvent was evaporated to form an adhesion layer on the PEM. Subsequently, the catalyst layer ink was coated on the adhesion layer by a screen printing method and the solvent was evaporated to form a catalyst layer on the adhesion layer. These processes were performed with respect to the both surfaces of the PEM so that an MEA was fabricated.

### <Comparative example 1>

A PEM employing sulfonated polyether ketone as the polymer electrolyte was used. The adhesion layer ink and the catalyst layer ink, respectively, were coated on a substrate of a polymer film and dried so that an adhesion layer and a catalyst layer were formed. A polytetrafluoroethylene (PTFE) film was used as the substrate of a polymer film. After the PEM was placed on the adhesion layer formed on the substrate, their interfaces were stuck to each other by heating and pressing for ten minutes with a hot press apparatus which was set at 180 °C, and subsequently the substrate was stripped off so that the adhesion layer was arranged on the PEM. Then, after the adhesion layer arranged on the PEM was placed on the catalyst layer formed on the substrate, their interfaces were stuck to each other by heating and pressing for ten minutes with a hot press apparatus which was set at 180 °C, and subsequently the substrate was stripped off so that the catalyst layer was arranged on the adhesion layer. An MEA was fabricated by arranging the adhesion layer and the catalyst layer on both surfaces of the PEM.

Adhesion strengths of the MEAs fabricated by the method of Example 1 and the Comparative example 1 were evaluated by a stripping test using a cellotape® (cellulose adhesive tape). In this stripping test, it is possible to evaluate adhesion strength between the catalyst layer and the PEM by pasting the cellotape® on the catalyst layer and then stripping it off.
When the cellotape® was pasted on the catalyst layer of the MEA of the Comparative example 1 and then stripped off the MEA, it was observed that the catalyst layer was liable to be stripped off the PEM together with the cellotape®, indicating an insufficient interfacial adhesion between the PEM and the adhesion layer or between the adhesion and the catalyst layer.

On the other hand, when the cellotape® was pasted on the catalyst layer of the MEA of the Example 1 and then stripped off the MEA, it was observed that the catalyst layer was hardly stripped off the PEM. In addition, a fuel cell employing the MEA of the Example 1 had an electrical resistance lower than that of a fuel cell employing the MEA of the Comparative example 1. Therefore, it can be concluded that the MEA of the Example 1 had a high level of interfacial adhesions between the PEM and the adhesion layer and between the adhesion layer and the catalyst layer.

### INDUSTRIAL APPLICABILITY

Since an MEA of the present invention has a high level of interfacial adhesions, a fuel cell employing the MEA tends to be free from serious problems in long-term durability. Accordingly, the present invention can preferably be used for a fuel cell employing a PEM, particularly that for stationary cogeneration systems and fuel cell cars etc.

### DESCRIPTION OF THE SYMBOLS AND NUMERALS

1: Polymer electrolyte membrane (PEM)
2: Adhesion layer
2a: Coated layer of adhesion layer ink
3: Catalyst layer
3a: Coated layer of catalyst layer ink
4: Membrane electrode assembly (MEA)
5: Fixing means
6: Heating means
7: Mixed layer

## Claims

1. A manufacturing method of a membrane electrode assembly (MEA), said MEA comprising:
a polymer electrolyte membrane (PEM);
catalyst layers which are arranged on both surfaces of said PEM; and
adhesion layers which are arranged between said PEM and each of said catalyst layers respectively and provide adhesions between said PEM and each of said catalyst layers, said method comprising:
sequentially laminating said adhesion layers and said catalyst layers on said PEM, wherein said adhesion layers and said catalyst layers are formed by a coating method.

2. The manufacturing method of an MEA according to claim 1, said method comprising:
a fixing process in which said PEM is fixed;
a heating process in which said PEM being fixed in said fixing process is heated;
a first forming process in which an adhesion layer ink containing a polymer electrolyte and a solvent is coated on said PEM heated in said heating process and is dried so that said adhesion layers are formed; and
a second forming process in which a catalyst layer ink containing a catalyst and a solvent is coated on said adhesion layers and is dried so that said catalyst layers are formed.

3. The manufacturing method of an MEA according to claim 2, wherein said PEM is heated at a temperature of 60-200 °C in said heating process.

4. An MEA which is manufactured by the manufacturing method of an MEA according to any one claim selected from claims 1-3.

5. A fuel cell comprising the MEA according to claim 4.

6. An MEA comprising:
a PEM;
catalyst layers which are arranged on both surfaces of said PEM respectively; and
adhesion layers which are arranged between said PEM and each of said catalyst layers respectively and provide adhesions between said PEM and each of said catalyst layers, wherein
mixed layers in which a polymer electrolyte contained in said PEM and a polymer electrolyte contained in said adhesion layers blend together are respectively arranged between said PEM and each of said adhesion layers.

7. An MEA, wherein another mixed layer in which a polymer electrolyte contained in said adhesion layers and a polymer electrolyte contained in said catalyst layers blend together is further arranged between said adhesion layers and said catalyst layers.
